# EUROPÄISCHE PATENTANMELDUNG

(11) **EP 1 217 771 A2**
(43) Veröffentlichungstag der Anmeldung: **26.06.2002**
(21) Anmeldenummer: 01440420.6
(22) Anmeldetag: 17.12.2001
(51) Int. Cl.: H04J 3/06, H04Q 11/04

(54) **Verfahren, Taktgebermodul und Empfängermodul zur Synchronisierung**

(30) Priorität: 23.12.2000 DE 10064928
(71) Anmelder: ALCATEL, 75008 Paris (FR)
(72) Erfinder: Wolf, Michael Joachim, Dr., 74395 Mundelsheim (DE); Höhn, Jürgen, 74232 Abstatt (DE)
(74) Vertreter: Urlichs, Stefan, Dipl.-Phys.

(57) **Zusammenfassung**

Die vorliegende Erfindung betrifft ein Verfahren zur Synchronisierung zumindest eines Empfängermoduls (MOD1, MOD2), ein synchronisierbares Empfängermodul (MOD1, MOD2) hierfür sowie ein Taktgebermodul (GEN1, GEN2) hierfür.

Bei dem Verfahren zur Synchronisierung zumindest des Empfängermoduls (MOD1, MOD2), welches insbesondere ein Empfängermodul in einem Telekommunikationsnetz oder in einer Netzwerkeinrichtung eines Telekommunikationsnetzes ist, welchem zumindest ein erstes Taktsignal (TS1) und ein zweites Taktsignal (TS2) übermittelt wird und welches das mindestens eine erste Taktsignal (TS1) oder das zweite Taktsignal (TS2) als Master-Synchronisationssignal zu seiner Synchronisierung auswählt, wird vorgeschlagen, dass dem mindestens einen Empfängermodul (MOD1, MOD2) mindestens eine Master-Slave-Statusinformation (MSX) über das mindestens eine erste Taktsignal (TS1) und/oder das zweite Taktsignal (TS2) übermittelt wird, und dass das mindestens eine Empfängermodul (MOD1, MOD2) in Abhängigkeit von der Master-Slave-Statusinformation (MSX) das mindestens eine erste Taktsignal (TS1) oder das zweite Taktsignal (TS2) als Master-Synchronisationssignal zu seiner Synchronisierung auswählt.

## Beschreibung

Die vorliegende Erfindung betrifft ein Verfahren zur Synchronisierung zumindest eines Empfängermoduls, ein synchronisierbares Empfängermodul hierfür sowie ein Taktgebermodul hierfür.

Auf den Gebieten der Telekommunikation und der Computertechnik können die betriebsnotwendigen Baugruppen eines Gerätes häufig nicht auf einer Elektronik-Platine angeordnet werden, sondern müssen auf mehrere separate Module auf jeweils einer oder mehreren Platinen verteilt werden. Gerade bei Telekommunikationssystemen werden aus Gründen der Ausfallsicherheit zudem auch redundante Module eingesetzt. Damit die Module synchron arbeiten, empfangen die Empfänger-Module ein zentrales Taktsignal, der im einfachsten Fall lediglich ein Taktpuls (engl. Clock) ist.

Ein solches zentrales Taktsignal wird z.B. von einem zentralen Taktgeber-Modul erzeugt und an die Empfängermodule übertragen. Zur Übertragung ist beispielsweise ein Clock-Kanal eines Busses vorgesehen, an den die Empfängermodule angeschlossen sind. Die Empfängermodule arbeiten dann entweder unmittelbar mit dem von dem Bus abgegriffenen Taktsignal oder synchronisieren beispielsweise einen eigenen, auf dem jeweiligen Empfängermodul vorgesehenen lokalen Taktgeber auf das zentrale Taktsignal.

Bei einem konsequent redundant ausgelegten System wird ein Empfängermodul jedoch nicht nur mit einem Taktsignal, sondern mit zumindest einem zweiten Taktsignal versorgt, wobei dann die angeschlossenen Empfängermodule eines der Taktsignale als Master-Synchronisationssignal zu ihrer Synchronisierung auswählen und das oder die anderen Taktsignale als Slave-Synchronisationssignale dienen, die bei Ausfall des Master-Synchronisationssignals als Taktsignal(e) ausgewählt werden. Idealerweise sind alle Taktsignale synchron, wobei beispielsweise die Slave-Taktsignale auf die Master-Taktsignale synchronisiert werden, so dass die zu synchronisierenden Empfängermodule prinzipiell beliebig eines der Taktsignale ohne eine etwaige Phasendifferenz als ihr jeweiliges Master-Synchronisationssignal auswählen können.

Bei hochpräzisen und mit hoher Taktfrequenz arbeitenden Netzwerkeinrichtungen von Telekommunikationsnetzen, beispielsweise bei sogenannten Cross-Connects in der SDH-Übertragungstechnik (SDH = Synchronous Digital Hierarchy), haben jedoch bereits sehr geringe Phasenverschiebungen zwischen den einzelnen Taktsignalen einen störenden Einfluss auf die Präzision der Netzwerkeinrichtung. Die Module einer Netzwerkeinrichtung, bei denen es sich beispielsweise um I/O-Baugruppen (I/O = Input/Output) oder Schaltmatrizen handelt, arbeiten dann nicht mehr ausreichend synchron und es kommt z.B. zu Datenüberholungen oder -überschneidungen bei Nachrichten, die die Module der Netzwerkeinrichtung durchlaufen.

Dieselbe Problematik ergibt sich auch, wenn Netzwerkeinrichtungen in einem Telekommunikationsnetz aus Redundanzgründen mit mehr als einem Taktsignal synchronisiert werden.

Es ist daher Aufgabe der vorliegenden Erfindung, ein Verfahren sowie Vorrichtungen zu einer präzisen Synchronisierung zumindest eines Empfängermoduls, insbesondere eines Empfängermoduls in einem Telekommunikationsnetz oder in einer Netzwerkeinrichtung eines Telekommunikationsnetzes, zu schaffen.

Diese Aufgabe wird gelöst durch ein Verfahren gemäß der technischen Lehre des Anspruchs 1.

Zur Lösung der Aufgabe sind ferner vorgesehen: ein synchronisierbares Empfängermodul gemäß der technischen Lehre des Anspruchs 11 und ein synchronisierendes Taktgebermodul gemäß der technischen Lehre des Anspruchs 12.

Der Erfindung liegt dabei der Gedanke zugrunde, dass dem jeweiligen Empfängermodul, dem zumindest ein erstes Taktsignal und ein zweites Taktsignal übermittelt wird und das mindestens eine Empfängermodul das mindestens eine erste Taktsignal oder das zweite Taktsignal als Master-Synchronisationssignal zu seiner Synchronisierung auswählt, zusätzlich zu den Taktsignalen eine Master-Slave-Statusinformation über die Taktsignale übermittelt wird, anhand derer das Empfängermodul ermitteln kann, welches der Taktsignale momentan das Master-Taktsignal und welches Taktsignal das Slave-Taktsignal ist. Das Empfängermodul wählt dann das als Master-Synchronisationssignal gekennzeichnete Taktsignal zu seiner Synchronisierung aus und synchronisiert sich somit auf das mit höherer Präzision arbeitende Taktsignal.

Dies wirkt sich insbesondere dann vorteilhaft aus, wenn sich mehrere Empfängermodule auf dasselbe, als Master-Synchronisationssignal gekennzeichnete Taktsignal synchronisieren und nicht beliebig eines der Taktsignale auswählen, die gegebenenfalls Phasenverschiebungen aufweisen.

Die Erfindung kann vorteilhaft in einem beliebigen System mit redundanter Taktverteilung eingesetzt werden. Bei dem System kann es sich um ein einzelnes Gerät handeln oder beispielsweise auch um ein Kommunikationsnetz. In einer besonders bevorzugten Ausführungsform wird die Erfindung in einem Übertragungsnetzwerk, insbesondere einem Übertragungsnetzwerk mit synchroner digitaler Hierarchie (SDH), oder in einer Netzwerkeinrichtung des Übertragungsnetzwerks eingesetzt, beispielsweise in einem Cross-Connect eines SDH-Übertragungsnetzwerks, in einer SONET-Netzwerkeinrichtung (SONET = Synchronous Optical Network) oder in einer PDH-Netzwerkeinrichtung (PDH = plesiosynchrone digitale Hierarchie). Bei den Empfängermodulen handelt es sich beispielsweise um Ein/Ausgangsmodule oder Schaltmatrizen-Module, bei denen jedenfalls eine präzise Synchronisation zu einem reibungslosen Zusammenwirken untereinander erforderlich ist.

Weitere vorteilhafte Ausgestaltungen der Erfindung finden sich in den abhängigen Ansprüchen sowie in der Beschreibung.

Die Master-Slave-Statusinformation kann prinzipiell zusätzlich zu den jeweiligen Taktsignalen als separate Steuerungsinformation, z.B. auf einer separaten Datenleitung, an das oder die Empfängermodule übertragen werden.

Die Master-Slave-Statusinformation kann auch in den jeweiligen Taktsignalen zumindest teilweise sozusagen als "In-Band-Kennung" enthalten sein. Dabei sind verschiedene Varianten denkbar. Beispielsweise könnte den Taktsignalen eine Master-/Slave-Kennung z.B. in Form eines Bits beigefügt sein. Ferner könnte nur dasjenige Taktsignal als Master-Synchronisationssignal gekennzeichnet sein, dem eine Master-Kennung hinzugefügt wird, während Taktsignale ohne eine Kennung automatisch als Slave-Taktsignale gelten. Weiter könnten auch lediglich die Slave-Taktsignale, nicht jedoch das Master-Taktsignal gekennzeichnet sein.

Vorteilhafterweise wird eines der Taktsignale als ein Vorzugs-Master-Synchronisationssignal definiert. Wenn dann anhand der Master-Slave-Statusinformation nicht ermittelbar ist, welches der Taktsignale als das Master-Synchronisationssignal auszuwählen ist, beispielsweise weil die Master-Slave-Statusinformation dem jeweiligen Empfängermodul nicht oder fehlerhaft übermittelt wird oder die Master-Slave-Statusinformation mehr als ein Taktsignal als Master-Synchronisationssignal kennzeichnet, wählt das Empfängermodul das als Vorzugs-Master-Synchronisationssignal definierte Taktsignal aus. Störungen in Bezug auf die Master-Slave-Statusinformation wirken sich somit kaum auf die Präzision der Synchronisation aus.

Die Taktsignale werden vorzugsweise von einem oder mehreren Taktgebermodulen erzeugt. Diese können beispielsweise jeweils einen eigenen Taktgeber aufweisen, der beispielsweise einen Oszillator umfasst, und/oder einen von extern empfangen Takt regenerieren und an die ihnen zugeordneten Empfängermodule verteilen. Letzteres trifft beispielsweise für SDH-Cross-Connects zu, bei denen Ein-/Ausgangsmodule externe Taktsignale an sogenannten I/O-Ports (I/O = Input/Output) empfangen, die jeweils einem Übertragungsweg zugeordnet sind. Die Taktgebermodule wählen bevorzugt den I/O-Port mit der besten Takt-Qualität als Taktquelle aus und generieren aus dessen Taktinformationen die redundanten, für die Empfängermodule bestimmten Taktsignale.

Die von den Taktgebermodulen verteilten Taktsignale sind vorzugsweise zueinander synchron. Dazu sendet zumindest ein erstes (Master-)Taktgebermodul, das z.B. üblicherweise das als Master-Synchronisationssignal dienende Taktsignal generiert, an ein zweites (Slave-)Taktgebermodul ein Synchronisationssignal, an dem das zweite Taktgebermodul die korrekte Funktion des ersten Taktgebermoduls erkennen kann. Beide Taktgebermodule werden beispielsweise durch denselben I/O-Port mit einem Basis-Taktsignal versorgt und laufen somit synchron.

Wenn das zweite (Slave-)Taktgebermodul das Synchronisationssignal nicht mehr erhält, das erste Taktgebermodul demnach nicht mehr korrekt arbeitet, wird das zweite (Slave-)Taktgebermodul zum (Master-)Taktgebermodul und vorzugsweise wird dann das von dem zweiten Taktgebermodul erzeugte Taktsignal zum Master-Synchronisationssignal.

Es ist prinzipiell aber auch möglich, dass das von dem ersten an des zweite Taktgebermodul gesendete Synchronisationssignal nicht nur ein reines "Lebenszeichen" ist, sondern zudem Informationen zur Synchronisation des zweiten Taktgebermoduls enthält. Beispielsweise könnte das von dem ersten Taktgebermodul erzeugte Taktsignal an das zweite Taktgebermodul zu dessen Synchronisation gesendet werden.

Die Taktsignale werden vorzugsweise jeweils auf separaten, den jeweiligen Taktsignalen zugeordneten Taktleitungen dem oder den Empfängermodul(en) übermittelt, so dass die Taktsignale aus Redundanzgründen weitgehend unabhängig voneinander sind und Störungen auf einem Taktsignal sich nicht auf das jeweils andere Taktsignal auswirken. Prinzipiell könnten die Taktsignale auch auf einer gemeinsamen Leitung übertragen werden, beispielsweise mit Hilfe eines geeigneten Modulationsverfahrens.

Die den jeweiligen Taktsignalen zugeordneten Master-Slave-Statusinformationen werden, sofern sie nicht ohnehin in den jeweiligen Taktsignalen enthalten sind, ebenfalls vorzugsweise auf jeweils separaten Leitungen an die Empfängermodule übertragen.

Zweckmäßigerweise enthalten die Taktsignale Quellinformationen, aus denen die Quelle des Taktsignals, z.B. das das Taktsignal erzeugende Taktgebermodul, ermittelbar ist. Mit "A" und "B" bezeichnete Taktgebermodule fügen diese Bezeichnungen als Quellinformationen, z.B. als "Taktgebermodul A" bzw. "Taktgebermodul B", in die jeweiligen Taktsignale ein. Wenn nun ein Empfängermodul auf einer dem Taktgebermodul "B" zugeordneten Taktleitung ein Taktsignal mit der Kennung "Taktgebermodul A" erhält, beispielsweise weil ein die Taktleitung enthaltendes Kabel falsch gesteckt worden ist, kann das Empfängermodul die Störung signalisieren und gegebenenfalls eine Fehlerbehandlungsroutine starten, z.B. die den dem Taktgebermodulen "A" und "B" zugeordneten Taktleitungen intern wechselweise umschalten. Prinzipiell genügt es, wenn bei zwei Taktsignalen nur eines der Taktsignale eine solche Quellinformation enthält. Ferner könnte die Quellinformation auch in einer den Taktsignalen zugeordneten Steuerungsinformation enthalten sein. Beispielsweise könnte in einem zur Übertragung eines Taktsignals vorgesehenen Kabel jeweils eine Leitung für das Taktsignal und für die Quellinformation und/oder die Master-Slave-Statusinformation vorgesehen sein.

In einer bevorzugten Variante wird dem oder den Empfängermodulen zumindest ein drittes Taktsignal übermittelt, mit dem das oder die Empfängermodule eine Feinsynchronisation vornehmen können. Beispielsweise können die zu einer Grund-Synchronisierung dienenden Master- und Slave-Synchronisationssignale in einer für Messzwecke besonders geeigneten Bitrate, z.B. 2 Mbit/s, übertragen werden, während das oder die zur Feinsynchronisation dienenden Taktsignale in einer davon abweichenden, höheren Taktfrequenz übertragen werden, z.B. der für SDH typischen, jedoch mit üblichen Messwerkzeugen nicht oder nur schwierig messbaren 2,43 MHz-Frequenz.

In einer besonders bevorzugten Variante der Erfindung wird berücksichtigt, dass zwischen den von einem Empfängermodul empfangenen Taktsignalen Phasendifferenzen auftreten können. Diese können beispielsweise durch nicht oder mangelhaft synchronisierte Taktgebermodule hervorgerufen werden oder durch Laufzeitdifferenzen, weil die Taktsignale auf unterschiedlich langen Leitungen zu einem jeweiligen Empfängermodul übertragen werden. Jedenfalls sind in dem oder den Empfängermodulen den Taktsignalen zugeordnete Verzögerungsmittel vorgesehen, beispielsweise mittels Multiplexern dynamisch abtastbare Schieberegister, mit denen das jeweilige Empfängermodul eventuell vorhandene Phasendifferenzen zwischen dem als Master-Synchronisationssignal dienenden Taktsignal und dem oder den als Slave-Synchronisationssignale dienenden Taktsignalen ausgleichen kann, so dass das Empfängermodul jederzeit ohne einen Phasensprung zwischen den von den Verzögerungsmitteln bereitgestellten Taktsignalen umschalten kann. Besonders vorteilhaft ist es dabei, wenn das Empfängermodul das zuerst ausgewählte Taktsignal, z.B. das als Master-Synchronisationssignal ausgewählte Taktsignal, um eine vorbestimmte Verzögerungsdauer verzögert, die vorzugsweise einer maximal zu erwartenden Laufzeitdifferenz zwischen dem Master-Taktsignal und dem oder den Slave-Taktsignalen entspricht. Sind beispielsweise die zur Übertragung der Taktsignale verwendeten Kabel zwischen 0 Meter und maximal 200 Meter lang, wird z.B. eine Signallaufzeit auf einem 200-Meter-Kabel als vorbestimmte Verzögerungsdauer eingestellt. Das nicht ausgewählte Taktsignal, z.B. das oder die jeweiligen Slave-Taktsignale, werden ebenfalls zunächst um die vorbestimmte Verzögerungsdauer verzögert. Anschließend jedoch wird die Verzögerung des nicht ausgewählten Taktsignals so angepasst, dass letztlich alle Taktsignal an den Ausgängen der Verzögerungsmittel zumindest beinahe gleichphasig sind.

Dabei wird beispielsweise ein dem nicht ausgewählten Taktsignal zugeordnetes Schieberegister schrittweise an verschiedenen, durch einen Multiplexer einstellbaren Speicherstellen abgetastet und das jeweilige (nicht ausgewählte) Taktsignal entnommen. Dann wird die Phasendifferenz zwischen ausgewähltem (Master-) Taktsignal und nicht ausgewählten (Slave-) Taktsignal ermittelt und die Abtastungseinstellung des Multiplexers zur Verringerung der Phasendifferenz angepasst.

Jedenfalls adaptiert sich das Empfängermodul von selbst an unterschiedliche Phasendifferenzen zwischen den Taktsignalen, so dass das Empfängermodul ohne Phasensprung zwischen diesen umschalten kann und bei einem Ausfall eines Taktsignals kontinuierlich weiterarbeitet. Somit können, um das vorgenannte Beispiel aufzugreifen, Kabel mit einer beliebigen Länge bis zu 200 Meter zur Übertragung der Taktsignale verwendet werden.

Es versteht sich, dass die zur Ausführung des erfindungsgemäßen Verfahrens geeigneten Empfängermodule und/oder Taktgebermodule auch als Software-Module ausgebildet sein können, deren Programmcode von einem geeigneten Steuermittel, beispielsweise einem digitalen Signalprozessor, ausgeführt werden kann.

Im Folgenden werden die Erfindung und ihre Vorteile anhand eines Ausführungsbeispiels unter Zuhilfenahme der Zeichnung dargestellt. Es zeigen:
- Figur 1: eine beispielhafte Anordnung zur Ausführung des erfindungsgemäßen Verfahrens mit erfindungsgemäßen Empfängermodulen MOD1, MOD2 und erfindungsgemäßen Taktgebermodulen GEN1, GEN2, die in einer erfindungsgemäßen Netzwerkeinrichtung NWE enthalten sind,
- Figur 2: eine schematische Ansicht des Empfängermoduls MOD1 und
- Figur 3: ein Taktsignal TS1, das von dem Taktgebermodul GEN1 erzeugt wird.

Eine Netzwerkeinrichtung NWE enthält Empfängermodule MOD1, MOD2, die durch Taktgebermodule GEN1, GEN2 mit Taktsignalen TS1, TS3 bzw. TS2, TS4 versorgt werden. Die Taktsignale TS1, TS2 sind abgesehen von einer eventuellen Phasendifferenz zueinander redundante Taktsignale, von denen die Empfängermodule MOD1, MOD2 eines als Master-Synchronisationssignal zu ihrer Synchronisation auswählen. Die Taktsignale TS3, TS4 sind zu den Taktsignalen TS1, TS2 zusätzlich gesendete Taktsignale, die zur Feinsynchronisierung der Empfängermodule MOD1, MOD2 dienen. Die Taktsignale TS3, TS4 sind vorliegend ebenfalls zueinander redundante Taktsignale, von denen die Empfängermodule MOD1, MOD2 ein Taktsignal TS3 oder TS4 auswählen.

Bei der Netzwerkeinrichtung NWE handelt es sich um einen Netzknoten eines Übertragungsnetzwerkes, z.B. einen Cross-Connect eines SDH-Übertragungsnetzwerkes. Die Netzwerkeinrichtung NWE empfängt Daten, z.B. sogenannte SDH-Rahmen, mittels als Empfangsmittel dienender sogenannter I/O-Ports IO1, 102 (I/O = Input/Output) von nicht dargestellten Übertragungswegen, die z.B. auf SDH-Übertragungsleitungen vorgesehen sind. Die Daten, z.B. die SDH-Rahmen, umfassen zum Einen Nutzdaten (Payload) und zum Anderen Steuerdaten, die z.B. in ihrem sogenannten Overhead enthalten sind und vorliegend (externe) Taktsignale TEX1, TEX2 enthalten. Die Taktsignale TEX1, TEX2 können auch beispielsweise aus der Übertragungsrate und/oder der Struktur der an den I/O-Ports IO1, IO2 empfangenen Daten ermittelt werden oder auf nicht dargestellten separaten Taktsignalleitungen von der Netzwerkeinrichtung NWE empfangen werden. Die I/O-Ports IO1, IO2 sind z.B. als integrierte Schaltkreise realisierte Ein/Ausgangsmodule, die z.B. auf einer Schnittstellenkarte angeordnet sind.

Die Taktgebermodule GEN1, GEN2 sind jeweils als separate elektrische Baugruppen ausgeführt, z.B. als elektrische Platinen oder integrierte Schaltkreise. Die Taktgebermodule GEN1, GEN2 sind vorliegend als zueinander redundante Taktgebermodule ausgeführt und können beispielsweise auf einem zentralen Steuerungsboard oder Steuerungsrechner der Netzwerkeinrichtung NWE oder jeweils auf einem separaten Board angeordnet sein. Die Taktgebermodule GEN1, GEN2 können auch als Programm-Module ausgeführt sein, deren Programmcode beispielsweise jeweils von einem Prozessor eines oder mehrerer Steuerungsrechner der Netzwerkeinrichtung NWE ausgeführt wird.

Bei den zu synchronisierenden Empfängermodulen MOD1, MOD2 handelt es sich beispielsweise um Ein-/Ausgangsbaugruppen, Schaltmatrizen oder Stufen davon oder um sonstige Module, die für einen reibungslosen Betrieb der Netzwerkeinrichtung NWE synchron arbeiten müssen.

Vom I/O-Port IO1 wird das (externe) Taktsignal TEX1 über Verbindungen VG11, VG12 an die Taktgebermodule GEN1, GEN2 übermittelt und vom I/O-Port 102 wird das Taktsignal TEX2 über Verbindungen VG21, VG22 an die Taktgebermodule GEN1, GEN2 übertragen. Die Taktgebermodule GEN1, GEN2 wählen dasjenige der Taktsignale TEX1, TEX2 aus, das die jeweils beste Taktqualität aufweist. Die jeweilige Taktqualität ist beispielsweise als sogenannte "Synchronisation Status Message" (SSM) in SDH-Rahmen enthalten und kann somit von den I/O-Ports IO1, IO2 und/oder den Taktgebermodulen GEN1, GEN2 ermittelt werden. Nach den SDH-Standards des ETSI (= European Telecommunications Standards Institute kann die SSM in absteigender Qualitätsreihenfolge z.B. die Bedeutungen "Primary Reference Clock, "Transit Node", "Local Node", "SDH Equipment Clock" und "Do not use" aufweisen. Mit der Kennung "Do not use" signalisiert ein als Taktnehmer arbeitenden SDH-Knoten einem als Taktquelle dienenden SDH-Knoten, dass er dessen Taktsignal momentan als Referenz ausgewählt hat und folglich ein von ihm (=Taktnehmer) an den als Taktquelle arbeitenden SDH-Knoten (rück-) übermitteltes Taktsignal nicht zu dessen Synchronisierung verwendet werden darf. Die vorgenannten sowie weitere Synchronisation Status Messages (SSMs) für SDH- und SONET-Übertragungsnetze sind durch die ITU (International Telecommunication Union) standardisiert.

Aus den sozusagen als Grund-Taktsignale dienenden Taktsignalen TEX1, TEX2 erzeugen die Taktgebermodule GEN1, GEN2 mittels nicht dargestellter Taktgenerierungsmitteln, beispielsweise mit sogenannten Phase Locked Loops (PLL), zum einen die Taktsignale TS1, TS2, die vorliegend sogenannte Rahmen-Taktsignale sind und mit einer Bitrate von 2.048 Megabit pro Sekunde übertragen werden, sowie die Taktsignale TS3, TS4, die einfache Taktsignal-Pulse zur Feinsynchronisierung der Empfängermodule MOD1, MOD2 sind und z.B. eine Frequenz von 2,43 Megaherz aufweisen. Die Rahmen-Taktsignale TS1, TS2 können aufgrund ihrer gängigen Frequenz mit bekannten und handelsüblichen Messwerkzeugen analysiert werden.

Die Rahmen-Taktsignale TS1, TS2 enthalten mehrere Basis-Rahmen, die zyklisch wiederholt werden, beispielsweise mit einer Frequenz von 8 Kiloherz (kHz), und die an sich schon als Taktsignale dienen. Die z.B. mit 8 kHz zyklisch gesendeten Basis-Rahmen enthalten Qualitätskennungen sowie weitere Synchronisationssignale oder -rahmen, beispielsweise ein 1-Hz-Taktsignal ONEHZ. Bei dem 1 Hz-Taktsignal ONEHZ kann es sich z.B. um ein Bit im Basis-Rahmen handeln, das alle 500 Millisekunden zwischen den Werten "0" und "1" wechselt. Die Qualitätskennungen sind z.B. einzelne Bits oder Bitfolgen und umfassen die oben erläuterte und von den I/O-Ports IO1, IO2 an die Taktgebermodule GEN1, GEN2 gesendete SSM-Kennung, als Quellkennungen dienende Kennungen CUX, GENX, IDX sowie eine Master-Slave-Statusinformation MSX.

Die Kennung IDX dient zur Identifizierung der I/O-Ports IO1, IO2 wird von diesen als Quellkennung, z.B. mit den Bezeichnungen "ID1", "ID2", an die Taktgebermodule GEN1, GEN2 übermittelt, beispielsweise im Rahmen der Taktsignale TEX1, TEX2. Somit kann durch Analyse der Taktsignale TS1, TS2 z.B. ein Verkabelungsfehler ermittelt werden, bei dem die Verbindungen VG11, VG12, VG21 und/oder VG22 aufgrund falsch gesteckter Kabelverbindungen nicht korrekt aufgebaut wurden. Die Quellkennung CUX ist ebenfalls den I/O-Ports IO1, IO2 zugeordnet und wird von den Taktgebermodulen GEN1, GEN2 in die Taktsignale TS1, TS2 als ein Hinweis darauf eingesetzt, welcher der I/O-Ports IO1, IO2 von ihnen als Quelle für das Grund-Taktsignal TEX1 bzw. TEX2 ausgewählt worden ist.

Die Taktgebermodule GEN1, GEN2 synchronisieren sich vorliegend gegenseitig, wobei sie sich über eine Verbindung VSY als Synchronisationssignale dienende Synchronisationsdaten SY wechselweise zusenden. Die dafür notwendigen Sende- und Empfangsmittel, beispielsweise entsprechende integrierte Schaltkreise, sind aus Gründen der Übersichtlichkeit nicht dargestellt. Unter anderem handeln die Taktgebermodule GEN1, GEN2 aus, welches der beiden Module als Master-Taktgebermodul und welches als Slave-Taktgebermodul arbeitet. Dementsprechend setzen die Taktgebermodule GEN1, GEN2 die Master-Slave-Statusinformationen MSX in den Taktsignalen TS1, TS2 auf die Werte "Master" bzw. "Slave", z.B. logisch "1" bzw. "0". In der vorliegenden Anordnung schaltet sich das als Master-Taktgebermodul arbeitende Taktgebermodul GEN1, GEN2 vorrangig auf den als Quelle für das Grund-Taktsignal TEX1, TEX2 ausgewählten I/O-Port IO1 bzw. 102 und das als Slave-Taktgebermodul arbeitende Taktgebermodul GEN1, GEN2 in Reihe dazu, bei einem Wechsel des Master-Slave-Status entsprechend umgekehrt. Prinzipiell könnten die Taktgebermodule GEN1, GEN2 jedoch auch parallel den jeweils als Quelle für das Grund-Taktsignal TEX1, TEX2 ausgewählten I/O-Port IO1, IO2 abtasten. Ferner könnten neben den I/O-Ports IO1, IO2 auch weitere, optional als Taktsignal-Quelle dienende I/O-Ports vorgesehen sein.

Das Taktgebermodul GEN1 sendet die Taktsignale TS1, TS3 über Verbindungen VM11, VM31; VM12, VM32 an die Empfängermodule MOD1, MOD2, das Taktgebermodul GEN2 die Taktsignale TS2, TS4 über Verbindungen VM21, VM42; VM22, VM41 an die Empfängermodule MOD1, MOD2. Das Empfängermodul MOD1 empfängt die Taktsignale TS1, TS3; TS2, TS4 an Eingängen oder Ports P11 bzw. P12, die nicht dargestellten Empfangsmitteln zugeordnet sind, die z.B. integrierte Schaltkreise zum Datenempfang nach der RS485-Schnittstellendefinition enthalten. Entsprechend empfängt das Empfängermodul MOD2 die Taktsignale TS1, TS3; TS2, TS4 über Eingänge oder Ports P21 bzw. P22.

Anhand der von den Taktgebermodulen GEN1, GEN2 in die Taktsignale TS1, TS2 eingesetzten, die Taktgebermodule GEN1, GEN2 jeweils eindeutig identifizierenden Quellkennung GENX können die Empfängermodule MOD1, MOD2 ermitteln, ob die Verbindungen VM11, VM12 korrekt mit ihren Ports P11 bzw. P21 und die Verbindungen VM21, VM22 korrekt mit ihren Ports P12 bzw. P22 verbunden sind. Bei fehlerhafter Verkabelung geben die Empfängermodule MOD1, MOD2 Fehlermeldungen aus, aktivieren z.B. eine nicht dargestellte Fehleranzeige oder melden den Fehler einem nicht dargestellten Steuerungsrechner.

In Abhängigkeit davon, in welchem der Taktsignale TS1 oder TS2 die Master-Slave-Statusinformation MSX auf "Master" gesetzt ist, wählen die Empfängermodule MOD1, MOD2 das Taktsignal TS1 oder das Taktsignal TS2 als Master-Synchronisationssignal aus und synchronisieren sich auf dieses.

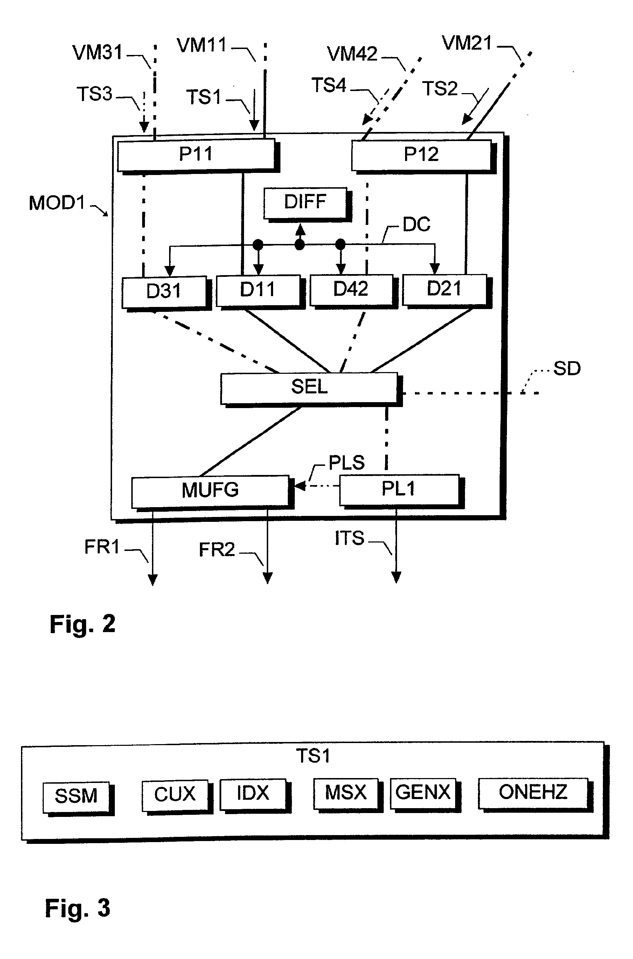

Eine schematische Ansicht des Empfängermoduls MOD1 ist in Figur 2 gezeigt. Das Empfängermodul MOD2 ist aus funktionaler Sicht gleich aufgebaut und wird daher nicht näher beschrieben. Die gezeigten Komponenten des Empfängermoduls MOD 1 können in Hardware aufgebaut sein, beispielsweise mittels eines oder mehrerer integrierter Schaltkreise. Beispielsweise kann das Empfängermodul MOD1 ganz oder teilweise z.B. als sogenannter Field Programmable Gate Array (FPGA) und/oder als Application Specific Integrated Circuit (ASIC) ausgeführt sein. Das Empfängermodul MOD1 kann auch als eine Software in Form eines Programm-Moduls realisiert sein, dessen Programmcode z.B. von einem Steuerungs-Prozessor einer Schaltmatrix oder einer sonstigen Prozessoranordnung ausgeführt werden kann.

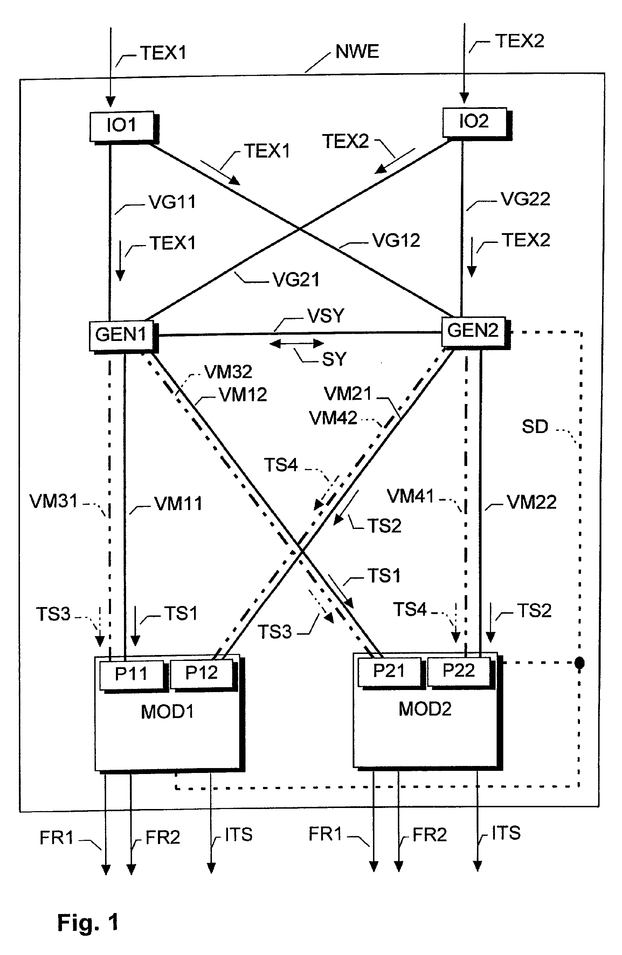

Der Signalfluss der Taktsignale TS1, TS2 in dem Empfängermodul MOD1 ist in den Figuren 1 und 2 mit durchgezogenen Linien dargestellt, der Signalfluss der Taktsignale TS3, TS4 mit strichpunktierten Linien. Ausgehend von den Ports P11 und P12 werden die Taktsignale TS3, TS1; TS4; TS2 Verzögerungsmitteln D31, D11; D42, D21 zugeführt, die zum Ausgleich von Phasendifferenzen vorgesehen sind, die zwischen den Taktsignalen TS3, TS1 einerseits und den Taktsignalen TS4; TS2 andererseits auftreten können. Die Verzögerungsmittel D31, D11; D42, D21 werden über Kontrollleitungen DC von einem Phasenvergleicher DIFF kontrolliert und justiert.

Von den Verzögerungsmitteln D31, D11; D42, D21 werden die Taktsignale TS3, TS1; TS4; TS2 an einen Umschalter SEL übermittelt, der ein Auswahlmittel zur Auswahl eines Taktsignals TS1, TS2 ist. Dazu analysieren der Umschalter SEL und/oder die als Empfangsmittel dienenden Ports P11, P12 z.B. die Master-Slave-Statusinformation MSX in den Taktsignalen TS1, TS2. Vorliegend schaltet der Umschalter SEL nicht nur zwischen den Taktsignalen TS1 oder TS2 um, sondern auch zwischen den diesen zugeordneten, zur Feinsynchronisation dienenden Taktsignalen TS3, TS4.

Die Taktsignale TS1, TS2 dienen zur Synchronisation eines Mehrfach-Rahmen-Generators MUFG, der aus den Taktsignalen TS1 oder TS2 beispielsweise einen Rahmen FR1 mit einer Frequenz 1 Herz und einen Rahmen FR2 mit einer Frequenz von 8 Kiloherz generiert. Die Taktsignale TS3, TS4 dienen zur Feinsynchronisation eines lokalen, z.B. als sogenannter Phase Locked Loop (PLL) gestalteten Taktgebers PL1. Der Taktgeber PL1 gibt einen hochfrequenten Takt ITS, z.B. mit 622 MHz, aus und synchronisiert zudem mit einem Synchronisationssignal PLS den Mehrfach-Rahmen-Generator MUFG. Die Feinsynchronisation mit den zusätzlichen Taktsignalen TS3, TS4 ist eine vorteilhafte Ausgestaltung der Erfindung.

Idealerweise sind die von dem Mehrfach-Rahmen-Generator MUFG gebildeten Rahmentakte FR1, FR2 im Wesentlichen synchron zum jeweils ausgewählten Taktsignal TS1 oder TS2. Es ist auch möglich, dass die Rahmentakte FR1, FR2 innerhalb vorbestimmter Toleranzgrenzen von den Taktsignalen TS1, TS2 abweichen dürfen. Ist eine solche Toleranzgrenze überschritten, synchronisiert sich der Mehrfach-Rahmen-Generator MUFG wieder von selbst neu oder erhält einen externen, beispielsweise von dem Taktgeber PL1 gegebenen Rücksetz- oder Neusynchronisations-Befehl.

Neben der oben dargestellten "In-Band-Signalisierung" der in den Taktsignalen TS1, TS2 ist es auch möglich, dass eine Master-Slave-Statusinformation auf einem separaten Steuerungskanal, beispielsweise auf dem in Figur 1 gestrichelt gezeichneten Steuerungskanal SD, oder im Zusammenhang mit sonstigen für die Empfängermodule MOD1, MOD2 bestimmten Steuerungs- oder Betriebsdaten übermittelt wird. Der Umschalter SEL schaltet in dieser Konstellation anhand einer über den Steuerungskanal SD übermittelten Master-Slave-Statusinformation zwischen den Taktsignalen TS1, TS2 sowie TS3, TS4 um.

Bei der vorliegenden Anordnung ist zwar vorgesehen, dass im Normalbetrieb nur eines der Taktgebermodule GEN1, GEN2 ein jeweils als Master-Synchronisationssignal dienendes Taktsignal TS1, TS2 versendet und das jeweils andere lediglich ein als Standby- oder Slave-Synchronisationssignal dienendes Taktsignal TS1, TS2. Wenn jedoch eine Störung auftritt, beispielsweise wegen Ausfalls der Verbindung VSY oder eines der Taktgebermodule GEN1, GEN2, werden die Synchronisationsdaten SY nicht mehr von beiden Taktgebermodulen GEN1, GEN2 korrekt empfangen. In diesem Fall geht oder gehen das oder die störungsfrei arbeitenden Taktgebermodule GEN1, GEN2 sozusagen automatisch in den Master-Modus über und setzen die Master-Slave-Statusinformationen MSX in den Taktsignalen TS1, TS2 auf die Werte "Master".

Wenn die Empfängermodule MOD1, MOD2 die Taktsignale TS1, TS2 jeweils auf ihren beiden Ports P11, P12; P21, P22 mit einer auf "Master" gesetzten Master-Slave-Statusinformationen MSX empfangen, kann es vorbestimmt sein, dass sie z.B. das Taktsignal TS1 als Master-Synchronisationssignal auswählen. Es ist auch möglich, dass auch dann, wenn beide Taktsignale TS1, TS2 zugleich auf "Slave" stehen, z.B. das Taktsignal TS2 von den Empfängermodulen MOD1, MOD2 als Master-Synchronisationssignal auszuwählen ist.

Zwischen den Taktsignalen TS3, TS1; TS4; TS2 können Phasendifferenzen auftreten, beispielsweise wegen mangelhafter Synchronisation der Taktgebermodule GEN1, GEN2 und/oder durch unterschiedliche Leitungslängen der Verbindungen VM31, VM11 einerseits und der Verbindungen VM21, VM42 andererseits. Die Empfängermodule MOD1, MOD2 gleichen derartige Phasendifferenzen mittels der Verzögerungsmittel D31, D11; D42, D21 und des Phasenvergleichers DIFF aus. Die Verzögerungsmittel D31, D11; D42, D21 sind z.B. als Schieberegister ausgestaltet, deren Speicherzellen über Multiplexer dynamisch abtastbar sind. Die jeweils abzutastenden Speicherzellen werden von dem Phasenvergleicher DIFF entsprechend der jeweiligen Phasendifferenzen zwischen den Taktsignalen TS3, TS1; TS4; TS2 eingestellt, so dass der Umschalter SEL jederzeit ohne einen Phasensprung zwischen den an den Verzögerungsmitteln D31, D11; D42, D21 ausgangseitig bereitstehenden, zum Ausgleich eingangseitiger Phasendifferenzen entsprechend verzögerten Taktsignalen TS3, TS1; TS4; TS2 umschalten kann.

Die für die mit vergleichsweise niederer Frequenz getakteten Taktsignale TS1, TS2 bestimmten Verzögerungsmittel D11, D21 sind derart bemessen, dass sie die Taktsignale TS1, TS2 um das Doppelte der maximale zu erwartenden Laufzeitdifferenz verzögern können, z.B. ist eine geeignete Speichertiefe der Schieberegister vorgesehen. Bei den für die mit hoher Frequenz getakteten Taktsignale TS3, TS4 bestimmten Verzögerungsmitteln D31, D42 genügt eine entsprechend geringere Verzögerungskapazität.

Zur Vereinfachung der Darstellung wird im Folgenden lediglich das Verfahren zur Phasenanpassung der Taktsignale TS1, TS2 dargestellt. Die Verzögerungsmittel D11, D21 verzögern die Taktsignale TS1, TS2 zunächst jeweils um eine Grundverzögerung, die einer maximal zu erwartenden Laufzeitdifferenz oder Phasendifferenz beider Signale entspricht. Die Laufzeitdifferenz kann beispielsweise anhand einer maximalen Leitungslänge von für die Verbindungen VM11, VM21 verwendeten Kabeln ermittelt werden. Anschließend ermittelt der Phasenvergleicher DIFF die Phasendifferenz eines der Taktsignale TS1, TS2, beispielsweise des nicht als Master-Synchronisationssignal ausgewählten Taktsignals TS1, zu dem jeweils anderen Taktsignal TS2, TS1, z.B. zu dem Taktsignal TS2 und adaptiert schrittweise die Verzögerungsdauer des diesem Taktsignal TS2, TS1 zugeordneten Verzögerungsmittels D21, so dass die Phasendifferenz verringert wird. Dabei werden die z.B. jeweils Schieberegister enthaltenden Verzögerungsmittel D11, D21 schrittweise an verschiedenen, durch einen Multiplexer einstellbaren Speicherstellen abgetastet, das jeweilige Taktsignal TS1, TS2 ermittelt und wieder an den Phasenvergleicher DIFF gemeldet.

Als vorteilhaft hat es sich dabei erwiesen, wenn die Adaption der Verzögerungsdauer bei großen Phasendifferenzen zunächst mit großer Schrittweite erfolgt, z.B. wenn das Taktsignal TS1 dem Taktsignal TS2 weit vorauseilt, und somit anfangs eine schell geringer werdende Phasendifferenz erzielt wird. Bei lediglich kleinen Phasendifferenzen wird die Schrittweite zur Adaption der Verzögerungsdauer verringert, z.B. wenn das Taktsignal TS1 nur noch wenig dem Taktsignal TS2 vorauseilt.

### Weitere Varianten der Erfindung sind ohne Weiteres möglich:

Es versteht sich, dass die Taktsignale TS1, TS2 auch weitere Nutzinformationen umfassen können, beispielsweise weitere Qualitätskennungen und/oder Uhrzeit- und/oder Datumsinformationen. Prinzipiell könnten die Taktsignale TS1, TS2 auch aber auch einfacher aufgebaut sein, beispielsweise als einfache Pulse, in denen gegebenenfalls eine Master-Slave-Statusinformation enthalten ist.

Ferner könnten auch weitere Taktgebermodule und/oder zu synchronisierende Empfängermodule zur weiteren Steigerung der Redundanz vorgesehen sein.

Die Taktgebermodule GEN1, GEN2 einerseits und die Empfängermodule MOD1, MOD2 andererseits könnten jeweils paarweise in separaten, örtlich voneinander getrennten Netzwerkeinrichtungen angeordnet sein, beispielsweise jeweils in SDH-Cross-Connects oder sonstigen Computersystemen. Ferner könnten beispielsweise auch einerseits das Taktgebermodul GEN1 und das Empfängermodul MOD1 und andererseits das Taktgebermodul GEN2 und das Empfängermodul MOD2 jeweils paarweise in separaten, örtlich voneinander getrennten Netzwerkeinrichtungen angeordnet sein.

Ferner könnten die Taktgebermodule GEN1, GEN2 auch jeweils autonom arbeitende Taktgebermittel aufweisen, beispielsweise Oszillatoren, und sich über die Verbindung VSY gegenseitig synchronisieren. Die externen Taktsignale TEX1, TEX2 wären dann nicht unbedingt erforderlich.

In einer weiteren Konstellation könnten die Empfängermodule MOD1, MOD2 unmittelbar mit den externen Taktsignalen TEX1, TEX2 versorgt werden, die dann z.B. eine Master-Slave-Statusinformation enthielten oder zu denen zusätzlich eine Master-Slave-Statusinformation an die Empfängermodule MOD1, MOD2 übermittelt werden würde, so dass die Taktgebermodule GEN1, GEN2 nicht erforderlich sind.

Weiter könnte eines der Taktgebermodule GEN1, GEN2 sozusagen als Default-Master-Taktgebermodul und eines als Slave-Taktgebermodul vorbestimmt sein, wobei letzteres sich auf das Master-Taktgebermodul synchronisiert und bei dessen Ausfall sozusagen automatisch zum Master-Taktgebermodul für die Netzwerkeinrichtung NWE wird.

Es könnten auch Kombinationen aus Taktgebermodulen und Empfängermodulen gebildet werden. Beispielsweise könnten das Taktgebermodul GEN1 und das Empfängermodul MOD1 sowie das Taktgebermodul GEN2 und das Empfängermodul MOD2 jeweils zu einem solchen Kombinationsmodul zusammengefasst werden und sich z.B. jeweils wechselweise synchronisieren.

Es versteht sich, dass auch beliebige Kombinationen der in den Ansprüchen sowie in der Beschreibung angegebenen Maßnahmen und Anordnungen möglich sind.

## Patentansprüche

1. Verfahren zur Synchronisierung zumindest eines Empfängermoduls (MOD1, MOD2), insbesondere eines Empfängermoduls in einem Telekommunikationsnetz oder in einer Netzwerkeinrichtung eines Telekommunikationsnetzes, wobei dem mindestens einen Empfängermodul (MOD1, MOD2) zumindest ein erstes Taktsignal (TS1) und ein zweites Taktsignal (TS2) übermittelt wird und das mindestens eine Empfängermodul (MOD1, MOD2) das mindestens eine erste Taktsignal (TS1) oder das zweite Taktsignal (TS2) als Master-Synchronisationssignal zu seiner Synchronisierung auswählt, **dadurch gekennzeichnet, dass** dem mindestens einen Empfängermodul (MOD1, MOD2) mindestens eine Master-Slave-Statusinformation (MSX) über das mindestens eine erste Taktsignal (TS1) und/oder das zweite Taktsignal (TS2) übermittelt wird, und dass das mindestens eine Empfängermodul (MOD1, MOD2) in Abhängigkeit von der Master-Slave-Statusinformation (MSX) das mindestens eine erste Taktsignal (TS1) oder das zweite Taktsignal (TS2) als Master-Synchronisationssignal zu seiner Synchronisierung auswählt.

2. Verfahren nach Anspruch 1, **dadurch gekennzeichnet, dass** das mindestens eine erste Taktsignal (TS1) oder das zweite Taktsignal (TS2) als ein Vorzugs-Master-Synchronisationssignal definiert wird, und dass das mindestens eine Empfängermodul (MOD1, MOD2) dasjenige mindestens eine erste Taktsignal (TS1) oder zweite Taktsignal (TS2) als Master-Synchronisationssignal auswählt, das als Vorzugs-Master-Synchronisationssignal definiert ist, wenn das als Master-Synchronisationssignal auszuwählende mindestens eine erste Taktsignal (TS1) oder zweite Taktsignal (TS2) anhand der mindestens einen Master-Slave-Statusinformation (MSX) nicht ermittelbar ist, insbesondere weil die Master-Slave-Statusinformation (MSX) dem mindestens einen Empfängermodul (MOD1, MOD2) nicht oder fehlerhaft übermittelt wird oder die mindestens eine Master-Slave-Statusinformation (MSX) sowohl das mindestens eine erste Taktsignal (TS1) als auch das zweite Taktsignal (TS2) als Master-Synchronisationssignal kennzeichnet.

3. Verfahren nach Anspruch 1, **dadurch gekennzeichnet, dass** das mindestens eine erste Taktsignal (TS1) von einem ersten Taktgebermodul (GEN1) und das zweite Taktsignal (TS2) von einem zweiten Taktgebermodul (GEN2) erzeugt wird, dass zumindest das erste Taktgebermodul (GEN1) dem zweiten Taktgebermodul (GEN2) ein insbesondere zu dessen Synchronisation vorgesehenes Synchronisationssignal (SY) übermittelt, und dass die mindestens eine Master-Slave-Statusinformation (MSX) das erste Taktsignal (TS1) solange als Master-Synchronisationssignal definiert, wie der zweite Taktgebermodul (GEN2) das Synchronisationssignal (SY) empfängt.

4. Verfahren nach Anspruch 3, **dadurch gekennzeichnet, dass** die mindestens eine Master-Slave-Statusinformation (MSX) das mindestens eine erste Taktsignal (TS1) und das zweite Taktsignal (TS2) jeweils als Master-Synchronisationssignal definiert, wenn der zweite Taktgebermodul (GEN2) das Synchronisationssignal (SY) nicht empfängt.

5. Verfahren nach Anspruch 1, **dadurch gekennzeichnet, dass** die mindestens eine Master-Slave-Statusinformation (MSX) zumindest teilweise in dem ersten Taktsignal (TS1) und/oder zumindest teilweise in dem zweiten Taktsignal (TS2) enthalten ist.

6. Verfahren nach Anspruch 1, **dadurch gekennzeichnet, dass** das mindestens eine erste Taktsignal (TS1) auf einer ersten Taktleitung und das zweite Taktsignal (TS2) auf einer zweiten Taktleitung an das mindestens eine Empfängermodul (MOD1, MOD2) übermittelt wird.

7. Verfahren nach Anspruch 1, **dadurch gekennzeichnet, dass** das mindestens eine erste Taktsignal (TS1) und/oder das zweite Taktsignal (TS2) und/oder eine diesen zugeordnete Steuerungsinformation zumindest eine Quellinformation (GENX) enthält, aus der das mindestens eine Empfängermodul (MOD1, MOD2) ermitteln kann, aus welcher Quelle das mindestens eine erste Taktsignal (TS1) bzw. das zweite Taktsignal (TS2) stammt, insbesondere dass das erste Taktgebermodul (GEN1) bzw. das zweite Taktgebermodul (GEN2) die sie jeweils identifizierende Quellinformation (GENX) dem mindestens einen ersten Taktsignal (TS1) bzw. dem zweiten Taktsignal (TS2) hinzufügen.

8. Verfahren nach Anspruch 1, **dadurch gekennzeichnet, dass** dem mindestens einen Empfängermodul (MOD1, MOD2) zumindest ein drittes, zu einer Feinsynchronisation vorgesehenes Taktsignal (TS3, TS4) übermittelt wird, und dass das mindestens eine Empfängermodul (MOD1, MOD2) sich sowohl auf das jeweils als Master-Synchronisationssignal ausgewählte mindestens eine erste Taktsignal (TS1) oder zweite Taktsignal (TS2) synchronisiert als auch auf das mindestens eine dritte Taktsignal (TS3, TS4).

9. Verfahren nach Anspruch 1, **dadurch gekennzeichnet, dass** es in einem Übertragungsnetzwerk, insbesondere mit synchroner digitaler Hierarchie (SDH), oder in einer Netzwerkeinrichtung des Übertragungsnetzwerks durchgeführt wird.

10. Verfahren nach Anspruch 1, **dadurch gekennzeichnet, dass** das mindestens eine Empfängermodul (MOD1, MOD2) das mindestens eine erste Taktsignal (TS1) um eine vorbestimmte erste, insbesondere einer maximal zu erwartenden Laufzeitdifferenz zwischen dem zumindest einen ersten Taktsignal (TS1) und dem zweiten Taktsignal (TS2) entsprechenden Verzögerungsdauer mit einem ersten Verzögerungsmittel (D11) verzögert, dass das mindestens eine Empfängermodul (MOD1, MOD2) das zweite Taktsignal (TS2) in einem zweiten Verzögerungsmittel (D21) verzögert, dass das Empfängermodul (MOD1, MOD2) eine Phasendifferenz zwischen dem mindestens einen ersten Taktsignal (TS1) und dem zweiten Taktsignal (TS2) ermittelt, und dass das Empfängermodul (MOD1, MOD2) die Phase des zweiten Taktsignals (TS2) an die Phase des ersten Taktsignals (TS1) durch Justierung des zweiten Verzögerungsmittels (D21) anpasst, so dass das mindestens eine Empfängermodul (MOD1, MOD2) das mindestens eine erste Taktsignal (TS1) und das zweite Taktsignal (TS2) gleichphasig von dem ersten Verzögerungsmittel (D11) bzw. von dem zweiten Verzögerungsmittel (D21) entnehmen kann.

11. Synchronisierbares Empfängermodul (MOD1, MOD2), insbesondere Empfängermodul in einem Telekommunikationsnetz oder in einer Netzwerkeinrichtung eines Telekommunikationsnetzes, das Empfangsmittel (P11, P12; P21, P22) zum Empfangen zumindest eines ersten Taktsignals (TS1) und eines zweiten Taktsignals (TS2) aufweist und das Auswahlmittel (SEL) zur Auswahl des mindestens einen ersten Taktsignals (TS1) oder des zweiten Taktsignals (TS2) als Master-Synchronisationssignal zu seiner Synchronisierung aufweist, **dadurch gekennzeichnet, dass** die Empfangsmittel (P11, P12; P21, P22) zum Empfangen mindestens einer Master-Slave-Statusinformation (MSX) über das mindestens eine erste Taktsignal (TS1) und/oder das zweite Taktsignal (TS2) ausgestaltet sind, und dass die Auswahlmittel (SEL) derart ausgestaltet sind, dass das Empfängermodul (MOD1, MOD2) in Abhängigkeit von der Master-Slave-Statusinformation (MSX) das mindestens eine erste Taktsignal (TS1) oder das zweite Taktsignal (TS2) als Master-Synchronisationssignal zu seiner Synchronisierung auswählen kann.

12. Taktgebermodul (GEN1, GEN2), insbesondere Taktgebermodul in einem Telekommunikationsnetz oder in einer Netzwerkeinrichtung eines Telekommunikationsnetzes, zur Synchronisierung zumindest eines Empfängermoduls (MOD1, MOD2), mit Taktgenerierungsmitteln zur Erzeugung mindestens eines ersten Taktsignals (TS1, TS2) und mit Sendemitteln zum Senden des mindestens einen ersten Taktsignals (TS1, TS2) an das zumindest eine Empfängermodul (MOD1, MOD2), **dadurch gekennzeichnet, dass** die Sendemittel zum Senden mindestens einer Master-Slave-Statusinformation (MSX) über das mindestens eine Taktsignal (TS1, TS2) ausgestaltet sind, so dass das mindestens eine Empfängermodul (MOD1, MOD2) in Abhängigkeit von der Master-Slave-Statusinformation (MSX) das mindestens eine erste Taktsignal (TS1) oder ein zweites Taktsignal (TS2) als Master-Synchronisationssignal zu seiner Synchronisierung auswählen kann.

13. (Erstes) Taktgebermodul (GEN1) nach Anspruch 12, **dadurch gekennzeichnet, dass** die Sendemittel zum Senden eines Synchronisationssignals ausgestaltet sind, das insbesondere zur Synchronisation eines zweiten Taktgebermoduls (GEN2) vorgesehen ist und/oder dass das erste Taktgebermodul (GEN1) Empfangsmittel zum Empfangen eines insbesondere zu seiner Synchronisation vorgesehenen Synchronisationssignals von einem zweiten Taktgebermodul (GEN2) aufweist und dass die Sendemittel derart ausgestaltet sind, dass sie anhand der mindestens einen Master-Slave-Statusinformation (MSX) das mindestens eine Taktsignal (TS1, TS2) solange als Master-Synchronisationssignal definieren, wie das erste Taktgebermodul (GEN1) das Synchronisationssignal empfängt.

14. Empfängermodul (MOD1, MOD2) nach Anspruch 11, **dadurch gekennzeichnet, dass** es Programmcode enthält, der von einem Steuermittel einer Netzwerkeinrichtung, insbesondere von einem Steuermittel auf einem Board einer Netzwerkeinrichtung für ein Übertragungsnetzwerk mit synchroner digitaler Hierarchie (SDH), ausgeführt werden kann.

15. Taktgebermodul (GEN1, GEN2) nach Anspruch 12, **dadurch gekennzeichnet, dass** es Programmcode enthält, der von einem Steuermittel einer Netzwerkeinrichtung, insbesondere von einem Steuermittel auf einem Board einer Netzwerkeinrichtung für ein Übertragungsnetzwerk mit synchroner digitaler Hierarchie (SDH), ausgeführt werden kann.

16. Speichermittel, insbesondere Diskette, CD-ROM, Digital Versatile Disc, Festplattenlaufwerk oder dergleichen, mit einem darauf gespeicherten Empfängermodul nach Anspruch 14 und/oder einem darauf gespeicherten Taktgebermodul (GEN1, GEN2) nach Anspruch 15.

17. Netzwerkeinrichtung, insbesondere Netzwerkeinrichtung für ein Übertragungsnetzwerk mit synchroner digitaler Hierarchie (SDH), mit zumindest einem Empfängermodul (MOD1, MOD2) nach Anspruch 11 und/oder Anspruch 14 und/oder mit zumindest einem Taktgebermodul (GEN1, GEN2) nach Anspruch 12 und/oder Anspruch 15.
